Europäisches Patentamt

European Patent Office

Office européen des brevets

(19)

(11) **EP 0 698 209 B1**

(12) **EUROPÄISCHE PATENTSCHRIFT**

(45) Veröffentlichungstag und Bekanntmachung des Hinweises auf die Patenterteilung:
**17.05.2000 Patentblatt 2000/20**

(21) Anmeldenummer: **95910423.3**

(22) Anmeldetag: **28.02.1995**

(51) Int. Cl.$^7$: **G01N 27/407**

(86) Internationale Anmeldenummer:
**PCT/DE95/00258**

(87) Internationale Veröffentlichungsnummer:
**WO 95/24643 (14.09.1995 Gazette 1995/39)**

(54) **VORRICHTUNG ZUR ERFASSUNG DES SAUERSTOFFGEHALTS IN GASEN**

DEVICE FOR SENSING THE OXYGEN CONTENT OF GASSES

DISPOSITIF DE DETERMINATION DE LA TENEUR EN OXYGENE DE GAZ

(84) Benannte Vertragsstaaten:
**DE FR GB**

(30) Priorität: **10.03.1994 DE 4408021**

(43) Veröffentlichungstag der Anmeldung:
**28.02.1996 Patentblatt 1996/09**

(73) Patentinhaber: **ROBERT BOSCH GMBH**
**70442 Stuttgart (DE)**

(72) Erfinder: **HOETZEL, Gerhard**
**D-70376 Stuttgart (DE)**

(74) Vertreter: **Müller, Georg**
**Robert Bosch GmbH**
**Postfach 30 02 20**
**70442 Stuttgart (DE)**

(56) Entgegenhaltungen:
**EP-A- 0 035 177    EP-A- 0 082 372**
**EP-A- 0 140 295    EP-A- 0 145 073**
**EP-A- 0 168 938    GB-A- 2 050 625**
**GB-A- 2 219 093    GB-A- 2 276 458**

**Beschreibung**

Stand der Technik

Die Erfindung betrifft eine Vorrichtung zur Erfassung des Sauerstoffgehalts in Gasen, bspw. im Abgas einer Brennkraftmaschine.

Es ist bekannt, den Sauerstoffgehalt von Abgasen mit Hilfe einer Konzentrationszelle z.B. aus $ZrO_2$-Keramik gegen einen Referenzsauerstoffgehalt in einer Referenzatmosphäre zu messen. Die Referenzatmosphäre kann bspw. durch die Umgebungsluft oder auch durch ein Referenzgas in einem gegenüber der Umgebung abgeschlossenem bzw. nahezu abgeschlossenem Volumen gebildet werden. Bei unterschiedlichen Sauerstoffpartialdrücken in Ab- und Referenzgas entwickelt die Zelle eine elektromotorische Kraft Un, die entsprechend der Nernst'schen Gleichung vom Logarithmus des Quotienten der Sauerstoffpartialdrücke abhängt. Bei bekannter Referenzgaszusammensetzung ist Un über Meßelektroden von der Zelle abgreifbar und kann als Maß für den Sauerstoffgehalt des Abgases verwendet werden. In Verbindung mit einem begrenzten Referenzgasvolumen tritt dabei das Problem auf, daß sich die Zusammensetzung des Referenzgases ändern kann. Diffusionsprozesse führen bspw. zu einem Ausgleich der Sauerstoffkonzentrationen und damit zu einem Verschwinden von Un. Zur Abhilfe ist es bspw. aus der DE OS 29 06 459 bekannt, der Konzentrationszelle mit Hilfe einer Konstantstromquelle über die Meßelektroden einen Pumpstrom Ip aufzuprägen, der so gerichtet ist, daß dem Referenzgasvolumen ständig Sauerstoff aus dem Abgas zugeführt wird. Damit kann einerseits ein Unterschied in den Sauerstoffpartialdrücken aufrechterhalten werden. Andererseits führt dieser Pumpstrom Ip in Verbindung mit dem elektrischen Widerstand Ri des Elektrolyten und der Elektroden zu einem Spannungsabfall Ri*Ip, der die elektromotorische Kraft Un der Zelle additiv zu einem Gesamtsignal Un+Ri*Ip überlagert.

Aus der EP 35 177 ist eine Variation des Pumpstroms bekannt, bei der zumindest bei fettem Gemisch der Pumpstrom erhöht wird, um den Temperatureinfluß auf das Sondensignal zu verringern.

Die GB 20 50 625 beschreibt einen Sensor mit drei räumlich getrennten Elektroden. Zwei benachbarte Elektroden bilden ein Paar, zwischen denen ein Pumpstrom fließt. Ein weiteres Paar benachbarter Elektroden dient zum Abgriff eines Meßsignals. Aufgrund der Geometrie der Anordnung fließt zwischen den Elektroden, die das Meßsignal liefern, kein Pumpstrom. Die GB 20 50 625 beschreibt damit eine räumliche Trennung von Stromzufuhr und Signalerfassung.

Die EP 82 372 befaßt sich mit der Gefahr von Überdrücken an den Referenzelektroden durch kumulative Wirkung von Pumpstrom und Sauerstoffdiffusion zur Referenzelektrode. Zur Abhilfe wird der Pumpstrom abhängig von der Sauerstoffkonzentration im Abgas variiert.

Die Aufgabe der Erfindung besteht in der Angabe eines Verfahrens und einer Vorrichtung, mit denen der additive Versatz Ri*Ip, der wegen der Temperaturabhängigkeit des Widerstandes Ri eine Störung des Nutzsignals Un darstellt, eliminiert wird.

Die Erfindung löst diese Aufgabe durch die Angabe einer Vorrichtung zur Erfassung des Sauerstoffgehalts in einem Meßgas, wobei die Vorrichtung wenigstens eine nach dem Nernst-Prinzip arbeitende Konzentrationszelle mit einer Meßelektrode, einem Festelektrolyten und einer Referenzelektrode umfaßt, wobei die Meßelektrode mit dem Meßgas in Verbindung steht und mit der Referenzelektrode, die mit einem Referenzgasvolumen in Verbindung steht, über den Festelektrolyten verbunden ist und wobei das Referenzgasvolumen vom Meßgas so getrennt ist, daß ein Teilchenaustausch zwischen dem Referenzgasvolumen und dem Meßgas wenigstens erschwert ist und wobei die zwischen Meß- und Referenzelektrode abgreifbare Ausgangsspannung der Konzentrationszelle ein Maß für den Unterschied der Sauerstoffkonzentrationen im Meßgas und dem Referenzgasvolumen darstellt und wobei die Vorrichtung ferner eine Stromquelle umfaßt, die so zwischen Referenz- und Meßelektrode einkoppelbar ist, daß sich im eingekoppelten Zustand ein Stromfluß ergibt, der so gerichtet ist, daß im Festelektrolyten Sauerstoff von Meß- zur Referenzelektrode transportiert wird, wobei die Vorrichtung ferner Schaltmittel umfaßt, die in einem ersten Schaltzustand die Stromquelle mit der Konzentrationszelle koppeln und die in einem zweiten Schaltzustand die Stromquelle von der Konzentrationszelle entkoppeln, so daß die Spannung zwischen Meß- und Referenzelektrode im entkoppelten Zustand nicht durch die Stromquelle beeinflußt ist.

Ein zugehöriges Verfahren zur Erfassung des Sauerstoffgehalts in Meßgasen mit Hilfe der genannten Vorrichtung zeichnet sich dadurch aus, daß eine für die Spannung zwischen Meß- und Referenzelektrode charakteristische Größe dann zur Erfassung des Sauerstoffgehalts verwendet wird, wenn die Schaltmittel im zweiten Schaltzustand sind.

Auf diese Weise wird der temperaturabhängige Einfluß des Pumpstroms auf die zwischen Meß- und Referenzgas abgreifbare Spannung vermieden, so daß auf eine aufwendige Regelung der Temperatur der Konzentrationszelle verzichtet werden kann.

Ein Ausführungsbeispiel der Erfindung wird in der Zeichnung offenbart und weiter unten im einzelnen beschrieben.

Dabei wird im Rahmen des Ausführungsbeispiels das Meßgas durch das Abgas einer Brennkraftmaschine geliefert, wie sie als Antriebsquelle für Kraftfahrzeuge üblich ist.

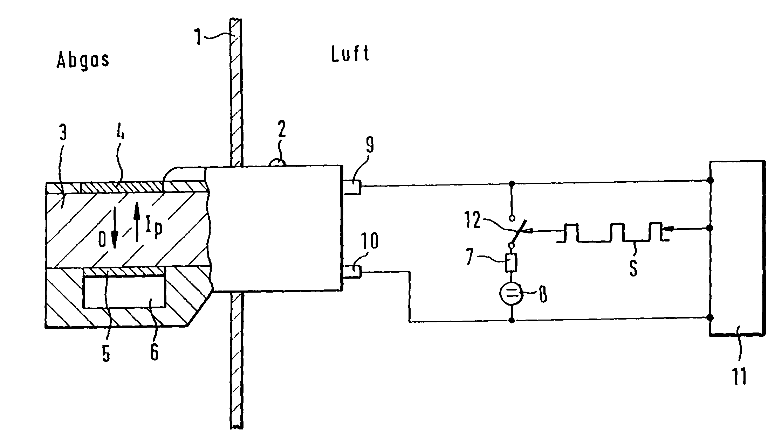

Fig. 1 zeigt im Schnitt eine Abgassonde 2 in einem Abgasrohr, von dem eine Wand 1 dargestellt ist. Diese Wand trennt das Abgas einer Brennkraftmaschine (links) von der Umgebungsluft (rechts). Die Abgassonde weist in ihrem abgasseitigen Teil einen Festelektrolyten 3 zwischen einer dem Abgas ausgesetzten Meßelektrode 4 und einer Referenzelektrode 5 auf. Ein mit der Meßelektrode 5 in Verbindung stehendes Referenzgasvolumen 6 steht weder mit dem Abgas noch mit der Umgebungsluft in direktem Kontakt. Ein sich evtl. aufbauender Überdruck im Referenzgasvolumen wird über eine indirekte Verbindung zur Umgebungsluft, bspw. durch eine porös ausgeführte Meßzuleitung 10, abgebaut, Zwischen dieser Zuleitung 10, die mit der Referenzelektrode verbunden ist, und einer Zuleitung 9, die mit der Meßelektrode in Verbindung steht, ist eine Stromquelle aus einer Gleichspannungsquelle 8 (Uv) und einem Vorwiderstand 7 (Rv) über ein Schaltmittel 12 geschaltet, wobei diese Realisierung lediglich als Ausführungsbeispiel einer Pumpstromquelle zu sehen ist. Der Pumpstrom kann auch auf beliebige andere Weise, bspw. durch eine Konstantstromquelle erzeugt werden. Je nach Schaltzustand des Schaltmittels 12 setzt sich die Spannung US zwischen Meßelektrode und Referenzelektrode anders zusammen. Bei nichtleitendem Schaltmittel ist US gleich der Nernstspannung Un der Konzentrationszelle, bei leitendem Schaltmittel gilt $US=Un+Ri*Ip$ , wobei Ip den von der Stromquelle gelieferten Pumpstrom und Ri den Innenwiderstand der Konzentrationszelle darstellt.

Das Schaltmittel 12 kann bspw. durch einen Transistorschalter realisiert werden, der von dem Steuergerät 11 mit einem Signal S abwechselnd vom leitenden in den nichtleitenden Zustand gesteuert wird.

Im nichtleitenden Zustand ist das Signal US=Un vom temperaturabhängigen Versatz Ri*Ip unabhängig und als Maß für den Sauerstoffgehalt des Abgases bspw. für die Gemischregelung verwendbar.

Für die Aufrechterhaltung einer stabilen Referenzgasatmosphäre ist es wesentlich, daß im zeitlichen Mittel die Zufuhr von Sauerstoff durch den Pumpstrom Ip bei leitendem Mittel 12 die auftretenden Verluste an Sauerstoff übertrifft. Solche Verluste treten bei nichtleitendem Mittel 12 durch die Messung der Spannung US=Un zwangsweise dann auf, wenn die Spannungsmessung auf eine Strommessung über einen Meßwiderstand zurückgeführt wird. Im Bereich der Messung von Spannungen in der Größenordnung einer Ausgangsspannung Un einer Abgassonde von einem Volt werden typischerweise Meßwiderstände im Megaohm-Bereich verwendet. Als Folge fließt ein Meßstrom im Mikroampere-Bereich. Im Elektrolyten wird dieser Strom von Sauerstoffionen aus dem Referenzgasvolumen getragen, so daß sich die Sauerstoffkonzentration im Referenzgasvolumen durch die Messung verringert.

Um einen Einfluß dieses Effektes auf die EMK der Konzentrationszelle verschwindend gering zu halten, hat es sich für Referenzgasvolumina, wie sie im Bereich der Abgassonden für Kraftfahrzeuge verwendet werden, als vorteilhaft herausgestellt, die Meßzeit auf Werte zwischen 50 und 150 ms zu beschränken und etwa ein Zehntel dieser Zeit für die Einspeisung des Pumpstroms Ip zu verwenden. Nimmt man beispielhaft eine Meßzeit von 100ms bei einem Meßstrom von einem Mikroampere an, so muß die dem Produkt dieser Größen entsprechende elektrische Ladung, die durch Sauerstoffionen aus dem Referenzgasvolumen transportiert wird, durch den Pumpstrom Ip ersetzt werden. Im Rahmen der hier gewählten Bedingungen ist dazu ein Pumpstrom von wenigstens 10 Mikroampere nötig. Um eine stabile Referenzgaszusammensetzung zu gewährleisten, ist es sinnvoll, diesen Mindestpumpstrom um einen Faktor 2 bis 3 zu erhöhen. Anstelle von einem Zehntel der Meßzeit kann auch ein Wert von einem Zwanzigstel bis zur Hälfte der Meßzeit als Pumpzeit vorteilhaft sein.

**Patentansprüche**

1.  Vorrichtung zur Erfassung des Sauerstoffgehalts in einem Meßgas, wobei die Vorrichtung wenigstens eine nach dem Nernst-Prinzip arbeitende Konzentrationszelle mit einer Meßelektrode (4), einem Festelektrolyten (3) und einer Referenzelektrode (5) umfaßt, wobei die Meßelektrode mit dem Meßgas in Verbindung steht und mit der Referenzelektrode, die mit einem Referenzgasvolumen (6) in Verbindung steht, über den Festelektrolyten verbunden ist und wobei das Referenzgasvolumen vom Meßgas so getrennt ist, daß ein Teilchenaustausch zwischen dem Referenzgasvolumen und dem Meßgas wenigstens erschwert ist und wobei die zwischen Meß- und Referenzelektrode abgreifbare Ausgangsspannung der Konzentrationszelle ein Maß für den Unterschied der Sauerstoffkonzentrationen im Meßgas und dem Referenzgasvolumen darstellt und wobei die Vorrichtung ferner eine Stromquelle (8) umfaßt, die so zwischen Referenz- und Meßelektrode einkoppelbar ist, daß sich im eingekoppelten Zustand ein Stromfluß ergibt, der so gerichtet ist, daß im Festelektrolyten Sauerstoff von Meß- zur Referenzelektrode transportiert wird, dadurch gekennzeichnet, daß die Vorrichtung ferner Schaltmittel (11, 12) umfaßt, die in einem ersten Schaltzustand die Stromquelle mit der Konzentrationszelle koppeln und die in einem zweiten Schaltzustand die Stromquelle von der Konzentrationszelle entkoppeln, so daß die Spannung zwischen Meß- und Referenzelektrode im entkoppelten Zustand nicht durch die Stromquelle beeinflußt ist.

2.  Verfahren zur Erfassung des Sauerstoffgehalts in Meßgasen mit Hilfe einer Vorrichtung (2) die wenigstens eine nach dem Nernst-Prinzip arbeitende Konzentrationszelle mit einer Meßelektrode (4), einem Festelektrolyten (3) und einer Referenzelektrode (5) umfaßt, wobei die Meßelektrode mit dem Meßgas in Verbindung steht und mit der Referenzelektrode, die mit einem Referenzgasvolumen (6) in Verbindung steht, über den Festelektrolyten verbunden ist und wobei das Referenzgasvolumen vom Meßgas so getrennt ist, daß ein Teilchenaustausch zwischen dem Referenzgasvolumen und dem Meßgas wenigstens erschwert ist und wobei die zwischen Meß- und Reterenzelektrode abgreifbare Ausgangsspannung der Konzentrationszelle ein Maß für den Unterschied der Sauerstoffkonzentrationen im Meßgas und dem Referenzgasvolumen darstellt und wobei die Vorrichtung ferner eine Stromquelle (8) umfaßt, die so zwischen Referenz- und Meßelektrode einkoppelbar ist, daß sich im eingekoppelten Zustand ein Stromfluß ergibt, der so gerichtet ist, daß im Festelektrolyten Sauerstoff von Meß- zur Referenzelektrode transportiert wird und wobei die Vorrichtung ferner Schaltmittel (11, 12) umfaßt, die in einem ersten Schaltzustand die Stromquelle mit der Konzentrationszelle koppeln und die in einem zweiten Schaltzustand die Stromquelle von der Konzentrationszelle entkoppeln, so daß die Spannung zwischen Meß- und Referenzelektrode im entkoppelten Zustand nicht durch die Stromquelle beeinflußt ist,
dadurch gekennzeichnet, daß eine für die Spannung zwischen Meß- und Referenzelektrode charakteristische Größe dann zur Erfassung des Sauerstoffgehalts verwendet wird, wenn die Schaltmittel im zweiten Schaltzustand sind.

3. Verfahren nach Anspruch 2, dadurch gekennzeichnet, daß die Schaltmittel periodisch zwischen beiden Schaltzuständen hin und her geschaltet werden.

4. Verfahren nach Anspruch 3, dadurch gekennzeichnet, daß das Verhältnis der Zeiten, für die die beiden Schaltzustände jeweils andauern, so vorbestimmt ist, daß der Zufluß von Sauerstoff zum Referenzgasvolumen im Schaltzustand 1 einen Abfluß von Sauerstoff aus dem Referenzgasvolumen im Schaltzustand 2 im zeitlichen Mittel übertrifft.

5. Verfahren nach Anspruch 4, dadurch gekennzeichnet, daß die Zeitdauer des ersten Schaltzustands, ein Zwanzigstel bis die Hälfte der Zeitdauer des zweiten Schaltzustands beträgt.

**Claims**

1. Device for registering the oxygen content in a sampled gas, the device comprising at least one concentration cell which operates according to the Nernst principle and includes a measuring electrode (4), a solid electrolyte (3) and a reference electrode (5), the measuring electrode communicating with the sampled gas and being connected via the solid electrolyte to the reference electrode, which communicates with a reference gas volume (6), and the reference gas volume being separated from the sampled gas in such a way that particle exchange between the reference gas volume and the sampled gas is at least impeded, and the output voltage of the concentration cell, which voltage can be tapped off between the measuring and the reference electrode, representing a measure of the difference in the oxygen concentration in the sampled gas and in the reference gas volume, and the device further comprising a current source (8) which can be coupled in between the reference and the measuring electrode in such a way that in the coupled-in state a current flow results whose direction is such that oxygen is transported in the solid electrolyte from the measuring to the reference electrode, characterized in that the device further comprises switching means (11, 12) which, in a first switching state, couple the current source to the concentration cell and which, in a second switching state, decouple the current source from the concentration cell, so that the voltage between the measuring and the reference electrode in the decoupled state is not affected by the current source.

2. Method for registering the oxygen content in sampled gases with the aid of a device (2) which comprises at least one concentration cell which operates according to the Nernst principle and includes a measuring electrode (4), a solid electrolyte (3) and a reference electrode (5), the measuring electrode communicating with the sampled gas and being connected via the solid electrolyte to the reference electrode, which communicates with a reference gas volume (6), and the reference gas volume being separated from the sampled gas in such a way that particle exchange between the reference gas volume and the sampled gas is at least impeded, and the output voltage of the concentration cell, which voltage can be tapped off between the measuring and the reference electrode, representing a measure of the difference in the oxygen concentration in the sampled gas and in the reference gas volume, and the device further comprising a current source (8) which can be coupled in between the reference and the measuring electrode in such a way that in the coupled-in state a current flow results whose direction is such that oxygen is transported in the solid electrolyte from the measuring to the reference electrode, and the device further comprising switching means (11, 12) which, in a first switching state, couple the current source to the concentration cell and which, in a second switching state, decouple the current source from the concentration cell, so that the voltage between the measuring and the reference electrode in the decoupled state is not affected by the current source, characterized in that a variable which is characteristic of the voltage between the measuring and the reference electrode is employed for registering the oxygen content in those situations, where the switching means are in the second switching state.

3. Method according to Claim 2, characterized in that the switching means are periodically switched back and forth between the two switching states.

4. Method according to Claim 3, characterized in that the ratio of the times for which the two switching states persist in each case is predetermined in such a way that the inflow of oxygen to the reference gas volume in switching state 1 will exceed, averaged over time, an outflow of oxygen from the reference gas volume in switching state 2.

5. Method according to Claim 4, characterized in that the duration of the first switching state is from one twentieth to half of the duration of the second switching state.

**Revendications**

1. Dispositif pour détecter la teneur en oxygène d'un gaz de mesure, dans lequel
au moins une cellule de concentration fonctionne selon le principe de Nernst avec une électrode de mesure (4), un électrolyte solide (3) et une électrode de référence (5), l'électrode de mesure en contact avec le gaz de mesure étant reliée par l'électrolyte solide avec l'électrode de référence en contact avec un volume de gaz de référence (6), et le volume de gaz de référence étant séparé du gaz de mesure, pour au moins rendre difficile un échange de particules entre le volume de gaz de référence et le gaz de mesure, et dans lequel
la tension de sortie de la cellule de concentration, qui se prend entre l'électrode de mesure et l'électrode de référence, constitue une mesure de la différence des concentrations en oxygène dans le gaz de mesure et dans le volume de gaz de référence, et en outre une source de courant (8) est couplée entre l'électrode de référence et l'électrode de mesure pour qu'à l'état couplé un passage de courant transporte de l'oxygène dans l'électrolyte solide, entre l'électrode de mesure et l'électrode de référence,
caractérisé en ce que
le dispositif comprend en outre des moyens de commutation (11, 12) qui, dans un premier état de commutation, couplent la source de courant à la cellule de concentration et qui, dans un second état de commutation, découplent la source de courant de la cellule de concentration pour que la tension entre l'électrode de mesure et l'électrode de référence à l'état découplé ne soit pas influencée par la source de courant.

2. Procédé pour détecter la teneur en oxygène d'un gaz de mesure, dans lequel
au moins une cellule de concentration fonctionne selon le principe de Nernst avec une électrode de mesure (4), un électrolyte solide (3) et une électrode de référence (5), l'électrode de mesure en contact avec le gaz de mesure étant reliée par l'électrolyte solide avec l'électrode de référence en contact avec un volume de gaz de référence (6), et le volume de gaz de référence étant séparé du gaz de mesure, pour au moins rendre difficile un échange de particules entre le volume de gaz de référence et le gaz de mesure, et dans lequel
la tension de sortie de la cellule de concentration, qui se prend entre l'électrode, de mesure et l'électrode de référence, constitue une mesure de la différence des concentrations en oxygène dans le gaz de mesure et dans le volume de gaz de référence, et en outre une source de courant (8) est couplée entre l'électrode de référence et l'électrode de mesure pour qu'à l'état couplé un passage de courant transporte de l'oxygène dans l'électrolyte solide, entre l'électrode de mesure et l'électrode de référence,
caractérisé en ce qu'
on utilise une valeur caractéristique de la tension entre l'électrode de mesure et l'électrode de référence pour saisir la teneur en oxygène, quand les moyens de commutation sont dans leur second état de commutation.

3. Procédé selon la revendication 2,
caractérisé en ce que
les moyens de commutation sont commutés périodiquement entre les deux états de commutation.

4. Procédé selon la revendication 3,
caractérisé en ce que
le rapport des durées des deux états de commutation est prédéterminé pour que l'apport d'oxygène dans le volume de gaz de référence à l'état de commutation (1) dépasse en moyenne dans le temps le départ d'oxygène du volume de gaz de référence à l'état de commutation (2).

5. Procédé selon la revendication 4,
caractérisé en ce que
la durée du premier état de commutation correspond à un vingtième jusqu'à la moitié de la durée du second état de commutation.